# EUROPEAN PATENT SPECIFICATION

(11) **EP 4 425 689 B1**
(45) Date of publication and mention of the grant of the patent: **15.07.2026**
(21) Application number: 22899152.7
(22) Date of filing: 29.11.2022
(51) Int. Cl.: H01M 50/54, B23K 20/10, B23K 101/36, H01M 50/528

(54) **APPARATUS FOR WELDING ELECTRODE TABS AND METHOD FOR WELDING ELECTRODE TABS**
VORRICHTUNG UND VERFAHREN ZUM SCHWEISSEN VON ELEKTRODENLASCHEN
APPAREIL DE SOUDAGE DE LANGUETTES D'ÉLECTRODE ET PROCÉDÉ DE SOUDAGE DE LANGUETTES D'ÉLECTRODE

(30) Priority: 29.11.2021 KR 20210167739
(43) Date of publication of application: 04.09.2024
(73) Proprietor: LG Energy Solution, Ltd., Seoul 07335 (KR)
(72) Inventor: PARK, Ah Ram, Daejeon 34122 (KR); LEE, Yong Tae, Daejeon 34122 (KR); LEE, Seung Byung, Daejeon 34122 (KR); KIM, Seok Je, Daejeon 34122 (KR)
(74) Representative: Plasseraud IP
(86) International application number: PCT/KR2022/019107
(87) International publication number: WO 2023/096470

(56) References cited:
- EP-A1- 4 108 375
- EP-A1- 4 235 944
- JP-A- 2013 165 037
- JP-A- 2019 207 861
- KR-A- 20170 046 910
- KR-A- 20180 072 065
- KR-A- 20180 072 065
- KR-A- 20190 054 617
- KR-A- 20200 105 272

## Description

### TECHNICAL FIELD

### CROSS-REFERENCE TO RELATED APPLICATIONS

The present application claims the benefit of the priority of Korean Patent Application 10-2021-0167739.

### TECHNICAL FIELD

The present invention relates to an apparatus for welding electrode tabs and a method for welding the electrode tabs.

### BACKGROUND ART

In general, unlike primary batteries, which are not chargeable, secondary batteries are chargeable and dischargeable, and are widely used in electronic devices such as mobile phones, notebook computers, camcorders, and the like, or electric vehicles, and the like. Particularly, since a lithium secondary battery has larger capacity than a nickelcadmium battery or a nickel-hydrogen battery and has a high energy density, its use has rapidly increased.

The secondary battery may be classified into a cylindrical battery or a prismatic battery, in which an electrode assembly is built in a cylindrical or prismatic metal can, and a pouch-type battery, in which an electrode assembly is built in a pouch-type case provided as an aluminum lamination sheet.

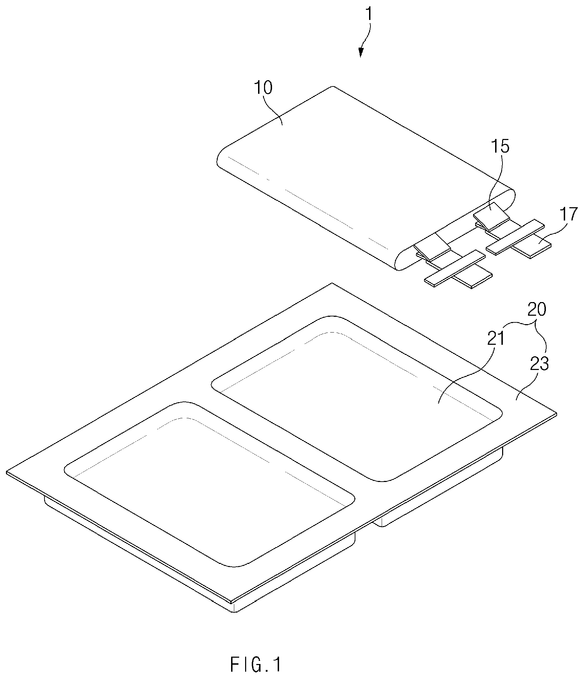

FIG. 1 is a view illustrating an example of a pouch-type secondary battery. A pouch-type secondary battery 1 includes an electrode assembly 10, in which electrodes and separators are alternately stacked, and a pouch 20 into which the electrode assembly is accommodated. Electrode tabs 15 may be connected to the electrodes of the electrode assembly 10. The electrode tabs 15 may be welded to each other on a predetermined area and then connected to an electrode lead 17. The pouch 20 includes a cup part 21 having a recessed shape to accommodate the electrode assembly 10. The cup part 21 of the pouch 20 may be provided in one or two. FIG. 1 illustrates an example in which the pouch 20 includes a left cup part and a right cup part. A peripheral portion 23 (terrace) is formed around a circumference of the cup part 21 by sealing.

However, when pulling force is applied to the electrode tab 15 due to deformation of the peripheral portion 23 of the pouch 20, the electrode tab 15 may be gradually tightened and then disconnected. Alternatively, even when the pulling force is applied to the electrode tab 15 due to expansion of the pouch 20, the electrode tab 15 may be gradually tightened and then disconnected. Such the disconnection is pointed out as a major cause of a fire. Pursuant to recent demands for high capacity and high performance in the pouch-type secondary battery, a length of the peripheral portion 23 is reduced to increase its energy density. Accordingly, a 'length of the electrode tab 15 from the electrode assembly 10 to a welding point of each of the electrode tabs 15' may be reduced, resulting in an increased risk of the disconnection.

EP 4 108 375 A1 discloses a welding apparatus, welding method using the same, and electrode assembly manufactured by the same welding method. KR 2020 0105272 A, which forms the basis for the preamble of claim 1, discloses an electrode assembly manufacturing method and electrode assembly manufacturing device. KR 2018 0072065 A discloses a battery cell and manufacturing method thereof. EP 4 235 944 A1 discloses an electrode tab guide device, electrode tab manufacturing device using the same, and an electrode assembly manufacturing method.

### DISCLOSURE OF THE INVENTION

### TECHNICAL PROBLEM

An object of the present invention is to provide an apparatus and method for welding an electrode tab, in which a 'length of an electrode tab from an electrode assembly to a welding point of each of electrode tabs' increases to prevent the electrode tabs from being disconnected even in a pouch-type secondary battery having high capacity and high performance.

### TECHNICAL SOLUTION

In one embodiment, an apparatus for welding electrode tabs protruding from an electrode assembly to each other is laid out in appended claim 1.

In further another embodiment, the first and second rods may be configured to relatively move toward each other so as to adjust a distance therebetween in the vertical direction.

In further another embodiment, the first rod may be configured to move in the proximity direction in a state in which the first and second rods relatively move toward each other to press the electrode tabs in the vertical direction.

In further another embodiment, a method for welding electrode tabs protruding from an electrode assembly is laid out in appended claim 4.

In further another embodiment, the first rod may include a first rod roller configured to be movable in a proximity direction directed toward the electrode assembly, in a separation direction directed away from the electrode assembly, and in an upward or downward direction.

### ADVANTAGEOUS EFFECTS

According to the present invention, since at least a portion of the electrode tabs is pulled toward the electrode assembly to weld the electrode tabs to each other, the length from the electrode assembly to the welding area in at least a portion of the electrode tabs increases. Therefore, in the case of the battery manufactured according to the present invention, even though the pulling force is applied to the electrode tabs due to the deformation of the peripheral portion (terrace) of the pouch, or even though the pulling force is applied to the electrode tabs due to the expansion of the battery, the electrode tabs may not be disconnected.

### BRIEF DESCRIPTION OF THE DRAWINGS

FIG. 1 is a view illustrating an example of a pouch-type secondary battery.
FIGS. 2a to 2d are views for explaining one of exemplary processes capable of being applied to welding of electrode tabs of a pouch-type secondary battery.
FIG. 3 is a cross-sectional view illustrating a portion of the battery module provided so that the several pouch-type batteries are accommodated in the case.
FIG. 4 is a view illustrating an apparatus for welding an electrode tab according to Embodiment 1 of the present invention.
FIGS. 5a to 5e are views for explaining a method for welding electrode tabs through the welding apparatus of FIG. 4.
FIG. 6 is a view illustrating an apparatus for welding an electrode tab according to an embodiment not covered by the scope of the claims.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

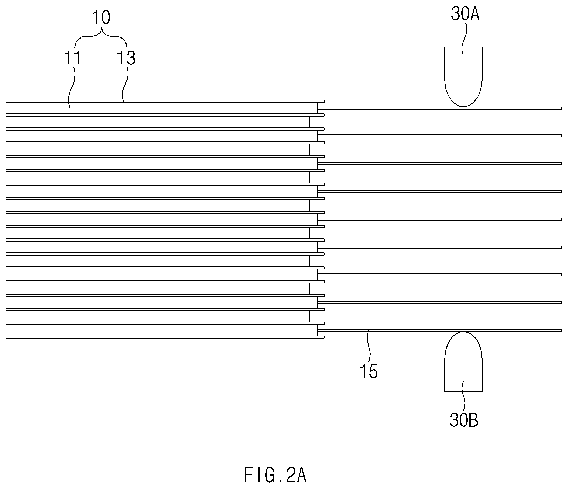

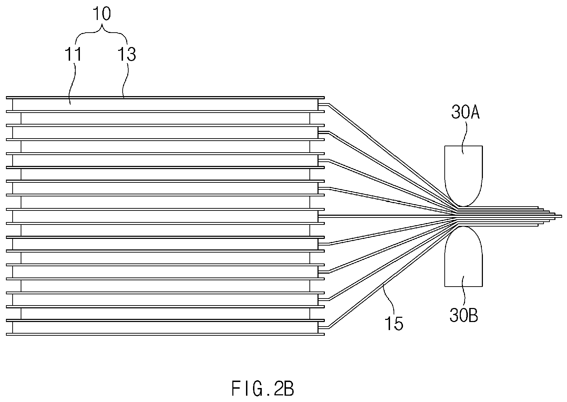

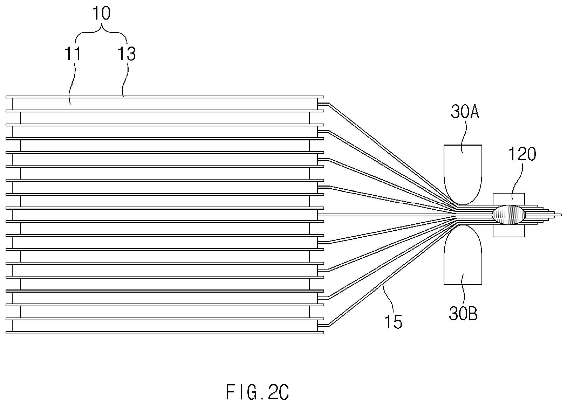

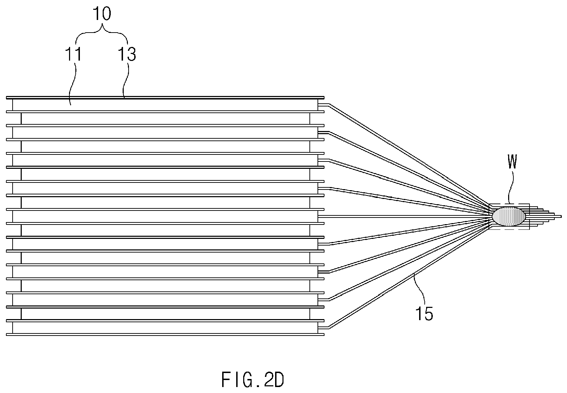

First, a process of welding electrode tabs of a pouch-type secondary battery will be described with reference to FIG. 2. FIG. 2 is a view for explaining one of exemplary processes capable of being applied to welding of electrode tabs of a pouch-type secondary battery.

First, the electrode assembly 10 is prepared as illustrated in FIG. 2a. The electrode assembly 10 may be provided by stacking electrodes 11 and separators 13. The electrode 11 includes a positive electrode and a negative electrode. An electrode tab 15 may be connected to the electrode 11. For reference, only the negative electrode tab 15 connected to the negative electrode is illustrated in FIG. 2 for convenience of description. The positive electrode tab connected to the positive electrode may also be provided in the electrode assembly 10 to extend in a direction different from an extension direction of the negative electrode tab 15 and may be welded in the same manner as the negative electrode tab. Next, the electrode tabs 15 are gathered as illustrated in FIG. 2b. For example, the electrode tabs 15 may be gathered by pressing the electrode tabs 15 using two rods 30A and 30B. Next, the electrode tabs 15 are welded through a welding part 120 as illustrated in FIG. 2c.

As illustrated in FIG. 2d, an electrode assembly 10 in which the electrode tabs 15 welded to each other on a predetermined welding area W are provided may be manufactured through these processes. After connecting an electrode lead 17 (see FIG. 1) to the electrode tabs 15, the electrode assembly 10 may be accommodated in the pouch 20 (see FIG. 1) to manufacture the pouch-type battery 1.

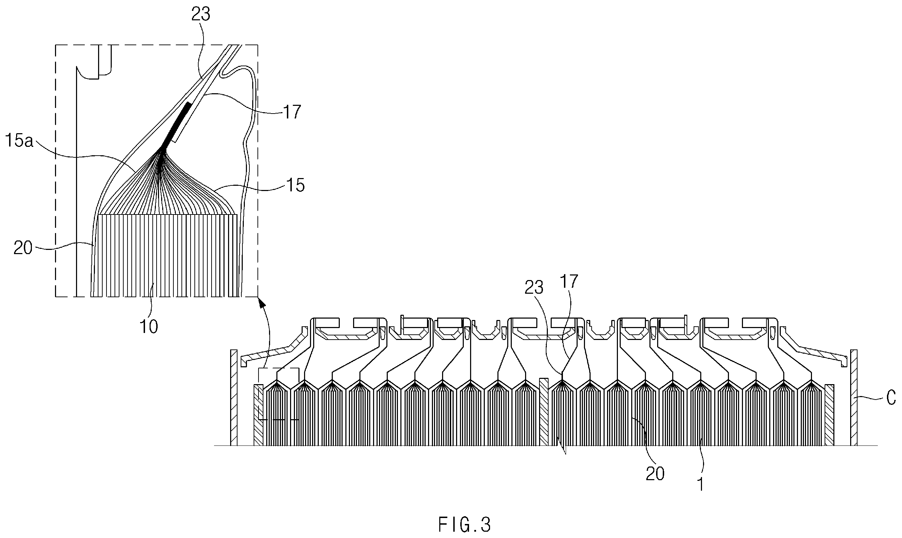

As illustrated in FIG. 3, several pouch-type batteries 1 may be accommodated in one case C and manufactured as a battery module. FIG. 3 is a cross-sectional view illustrating a portion of the battery module provided so that the several pouch-type batteries are accommodated in the case.

However, a peripheral portion 23 of the pouch 20 may be bent during the manufacturing of the battery module. Deformation of the peripheral portion 23 may cause bending of the electrode lead 17 to apply pulling force to the electrode tabs 15 connected to the electrode lead 17 (for example, see electrode tabs 15a in FIG. 3). The force may tightly pull the electrode tabs 15 to cause disconnection of the electrode tabs 15. The force may be larger in the outer electrode tab 15a. Even when the battery is expanded, the above disconnection problem may occur.

The present invention, which will be described in detail below, is intended to solve the above disconnection problem.

### Embodiment 1

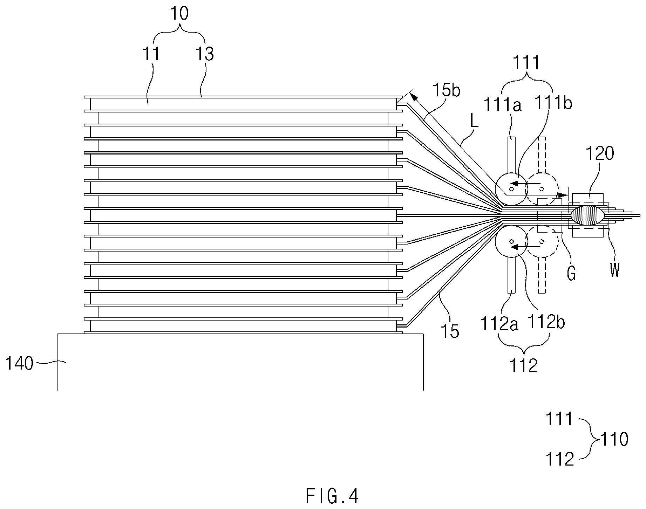

FIG. 4 is a view illustrating an apparatus for welding an electrode tab according to Embodiment 1 of the present invention. An apparatus for welding an electrode tab according to Embodiment 1 of the present invention relates to an apparatus for welding electrode tabs 15 protruding from an electrode assembly 10 to each other and includes a guide part 110 and a welding part 120 as illustrated in FIG. 4. For reference, hereinafter, it is assumed that electrodes 11 and separators 13 of the electrode assembly 10 are stacked in a vertical direction perpendicular to the ground. However, this is merely an example, and the stacking direction of the electrodes 11 and the separators 13 may vary depending on a direction in which the electrode assembly 10 is viewed.

The guide part 110 is configured to gather the electrode tabs 15. For example, the guide part 110 includes a first rod 111 disposed at one of upper and lower sides of the electrode tabs 15 and a second rod 112 disposed at the other side of the upper and lower sides of the electrode tabs 15. In FIG. 4, the first rod 111 disposed at the upper side and the second rod 112 disposed at the lower side are illustrated. The first and second rods 111 and 112 may gather the electrode tabs 15 on a predetermined area G.

The first and second rods 111 and 112 may move relative to each other in a vertical direction. For example, only the first rod 111 may move toward the second rod 112 in a stationary state of the second rod 112, only the second rod 112 may move toward the first rod 111 in a stationary state of the first rod 111, or the first and second rods 111 and 112 may move toward each other.

A distance between the first and second rods 111 and 112 may be adjusted by the relative movement of the first and second rods 111 and 112. When the distance between the first and second rods 111 and 112 is reduced, the electrode tabs 15 may be vertically pressed by the first and second rods 111 and 112. Due to this pressure, the electrode tabs 15 may be gathered on a predetermined area G. In this process, the electrode tabs 15 may be bent toward the predetermined gathering area G.

The welding part 120 may be configured to weld the electrode tabs 15 gathered by the guide part 110 on a predetermined welding area W. For example, the welding part 120 may include a horn and an anvil for performing ultrasonic welding. The electrode lead 17 (see FIG. 1) for supplying electricity to the outside of the battery may be welded to the electrode tabs 15 welded by the welding part 120.

The guide part 110 according to this embodiment presses the electrode tabs 15 toward the electrode assembly 10 while moving toward the electrode assembly 10 before being welded by the welding part 120. The guide part 110 increases a reference length L of all or portion of the electrode tabs 15 through this pressing. Here, the reference length L may be a 'length from the electrode assembly 10 to the welding area W' of the electrode tab 15.

For example, in the state in which the electrode tabs 15 are vertically pressed by the first and second rods 111 and 112, when the first and second rods 111 and 112 move toward the electrode assembly 10, at least a portion of the electrode tabs 15 may be pulled toward the electrode assembly 10 due to the pressing of the first and second rods 111 and 112, and thus, the 'length L from the electrode assembly 10 to the welding area W' in the electrode tabs 15 may increase. A remaining portion of the electrode tabs 15 (e.g., a right portion of the welding area W in FIG. 4) may also be pulled toward the electrode assembly 10. For reference, only the first rod 111 may move toward the electrode assembly 10 while the second rod 112 supports the electrode tabs 15. The guide part 110 may press the electrode tabs 15 to a degree that allows the electrode tabs 15 to be pulled.

If the electrode tabs 15 are welded in the pulling state or a state after the pulling, at least a portion of the electrode tabs 15 (e.g., the electrode tab 15b in FIG. 4) may increase in 'length L from the electrode assembly 10 to the welding area W in the electrode assembly 10'. As described above, the increase in length may prevent the electrode tab 15 from being disconnected by being pulled tightly. This is because, due to the increase in length, the electrode tabs 15 are tightly pulled only when the electrode tabs 15 are pulled more than before the increase in length. For reference, the force applied to the electrode lead 17 (see FIG. 1) may be transmitted to the electrode tabs 15 through a connection point between each of the electrode tabs 15 and the electrode lead 17.

The pulling of the electrode tabs 15 may increase toward the electrode tab (e.g., the electrode tab 15b) disposed at an outer side (e.g., an upper or lower side with reference to FIG. 4). This is because the electrode tab 15 disposed at the outside is greatly pressed by the guide part 110.

In the apparatus for welding the electrode tab according to this embodiment, before welded by the welding part 120, the length L from the electrode assembly 10 to the welding area W in at least a portion of the electrode tabs 15 increases. As a result, since the apparatus includes the guide part 110 configured to press the electrode tabs 15 toward the electrode assembly 10 while moving toward the electrode assembly 10, in the case of the battery manufactured by the apparatus for welding the electrode tab according to this embodiment, even if the pulling force is applied to the electrode tabs 15 due to the deformation of the peripheral portion 23 (terrace) of the pouch 20, or even if the pulling force is applied to the electrode tabs 15 due to the expansion of the battery, the electrode tab 15 may not be disconnected.

The guide part 110 according to this embodiment may determine a degree of pulling of the electrode tabs 15 in consideration of the increase in length required to prevent the disconnection from occurring. For example, in the case of the battery module in which a peripheral portion of the pouch 20 is greatly deformed, the guide part 110 may further move toward the electrode assembly 10. As described above, the guide part 110 may control a moving distance toward the electrode assembly 10 to adjust a degree of pulling of the electrode tab 15, i.e., an incremental degree of the reference length L.

The first rod 111 includes a first rod body 111a configured to move in a direction toward the electrode assembly 10. Hereinafter, the direction toward the electrode assembly 10 (e.g., a left direction with respect to FIG. 4) is referred to as a proximity direction. The first rod body 111a may be a bar or block that rotatably supports the first rod roller 111b to be described later. This may be equally applied to the second rod body 112a to be described later. For reference, the first rod 111 may move not only in the proximity direction but also in a separation direction, i.e., a direction away from the electrode assembly 10 (e.g., in the right direction with reference to FIG. 4). This may be equally applied to the second rod 112.

The first rod 111 includes a first rod roller 111b disposed at a lower end of the first rod body 111a. When the first rod roller 111b moves in the proximity direction, the first rod roller 111b may be in contact with the electrode tab disposed to be closest among the electrode tabs 15 (e.g., the electrode tab disposed at the uppermost side in FIG. 4) to rotate. For example, the first rod roller 111b may move toward the electrode assembly 10 in the state of being in contact with the uppermost electrode tab 15b. Here, the first rod roller 111b may rotate by friction with the electrode tab 15b when the first rod 111 includes the first rod roller 111b, and the electrode tab 15 may be pressed without damage to the electrode tab 15.

Since the first rod 111 according to this embodiment is disposed above the electrode tabs 15, the first rod roller 111b may be disposed on a lower end, which is an end toward the electrode tabs 15, of upper and lower ends of the first rod body 111a. When the first rod is disposed below the electrode tabs, the first rod roller may be disposed on an upper end of the first rod body.

The second rod 112 also includes a second rod body 112a configured to move in the proximity direction. The second rod body 112a is moved by being interlocked with the first rod body 111a. For example, in the state in which the electrode tabs 15 are pressed by the first rod roller 111b and the second rod roller 112b to be described later, when the first rod body 111a moves in the proximity direction, the second rod body 112a may move in the proximity direction together with the first rod body 111a.

The second rod 112 also includes the second rod roller 112b disposed on an end toward the electrode tabs 15 of upper and lower ends of the second rod body 112a. In FIG. 4, the second rod roller 112b disposed on the upper end of the second rod body 112a is illustrated. When the second rod roller 112b moves in the proximity direction, in the state in which the electrode tabs 15 are vertically pressed together with the first rod roller 111b, the second rod roller 112b may be in contact with the electrode tab (e.g., the electrode tab disposed at the lowermost side in FIG. 4) disposed to be closest among the electrode tabs 15 to rotate.

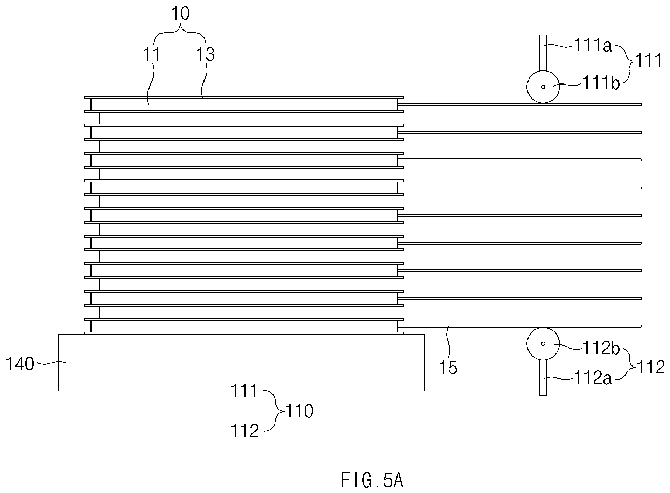

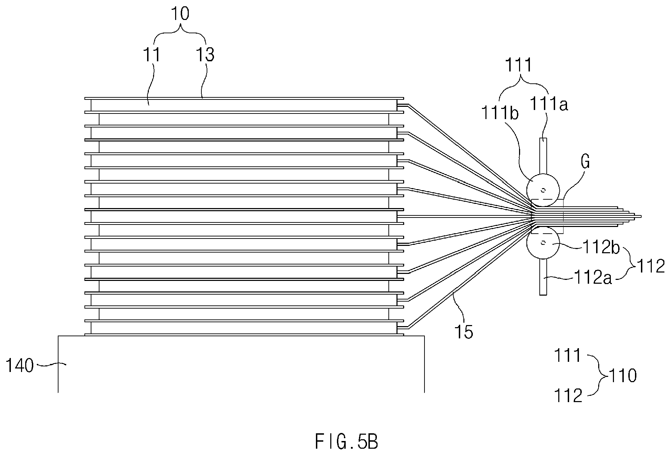

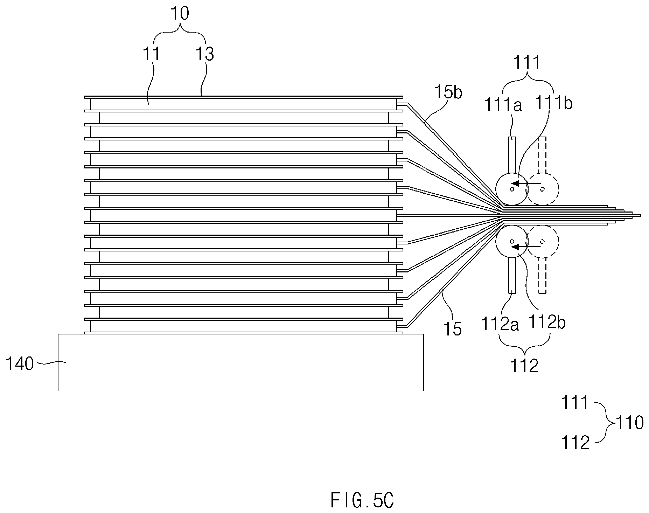

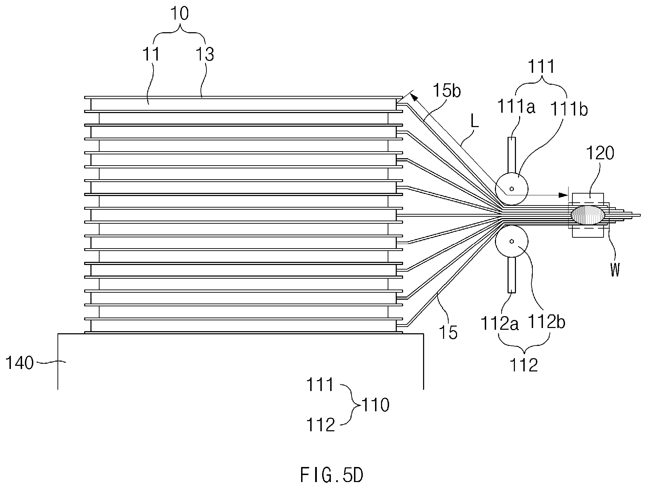

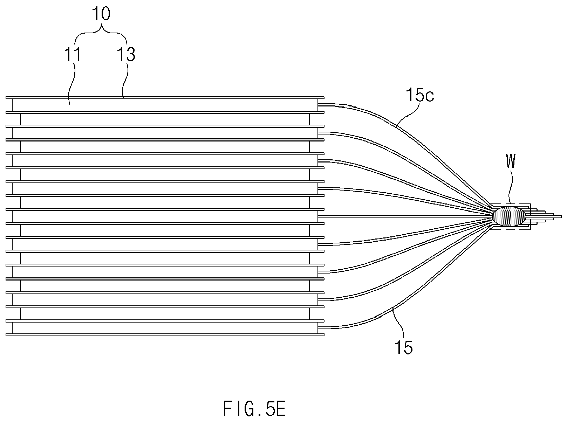

Hereinafter, a process of welding the electrode tabs 15 through the welding apparatus according to this embodiment will be described with reference to FIG. 5. FIG. 5 is a view for explaining a method for welding the electrode tabs through the welding apparatus of FIG. 4.

First, an electrode assembly 10 is prepared as illustrated in FIG. 5a. Here, the electrode assembly 10 may be seated on a seating part 140. The seating part 140 may be a jig or die on which the electrode assembly 10 is seated.

Next, the electrode tabs 15 are gathered as illustrated in FIG. 5b. This may be implemented by an operation of the guide part 110. For example, the electrode tabs 15 may be gathered on the predetermined area G while the first and second rods 111 and 112 respectively move toward each other. Alternatively, in a state in which the second rod 112 supports the electrode tabs 15 from below, the first rod 111 may press the electrode tabs 15 below from above so that the electrode tabs 15 are gathered on the predetermined area. As described above, the electrode tabs 15 may be pressed from upper and lower sides to gather the electrode tabs 15.

Next, as illustrated in FIG. 5c, the electrode tabs 15 are pressed toward the electrode assembly 10 in the state of gathering the electrode tabs 15. Due to this pressure, at least a portion of the electrode tabs 15 may be pulled toward the electrode assembly 10. This may be implemented by an operation of the guide part 110. For example, the first and second rod rollers 111b and 112b may press the electrode tabs 15 in the vertical direction according to the vertical movement of the first and second rod bodies 111a and 112a. In the pressed state, the first and second rod rollers 111b and 112b may press the electrode tabs 15 toward the electrode assembly 10 along the horizontal movement of the first and second bodies 111a and 112a. Due to this pressure, at least a portion of the electrode tabs 15 (e.g., the uppermost or lowermost electrode tab in FIG. 4) may be pulled toward the electrode assembly 10.

Next, as illustrated in FIG. 5d, the electrode tabs 15 are welded on the welding area W through the welding part 120 in the state of pulling the electrode tabs 15.

Through this process, in the case of at least a portion of the electrode tabs 15, the 'length L (see FIG. 5d) from the electrode assembly 10 to the welding area W' increases, and in this state, the electrode tabs 15 may be welded to each other. As a result, in the case of at least a portion of the electrode tabs 15 (e.g., the electrode tab 15c), as illustrated in FIG. 5e, a length from the electrode assembly 10 to the welding area W increases in comparison to a case in which there is no pulling process. For reference, the increase in length as described above may be larger as the electrode tab 15 is disposed closer to the guide part 110.

### Embodiment 2 (not falling under the scope of the claims)

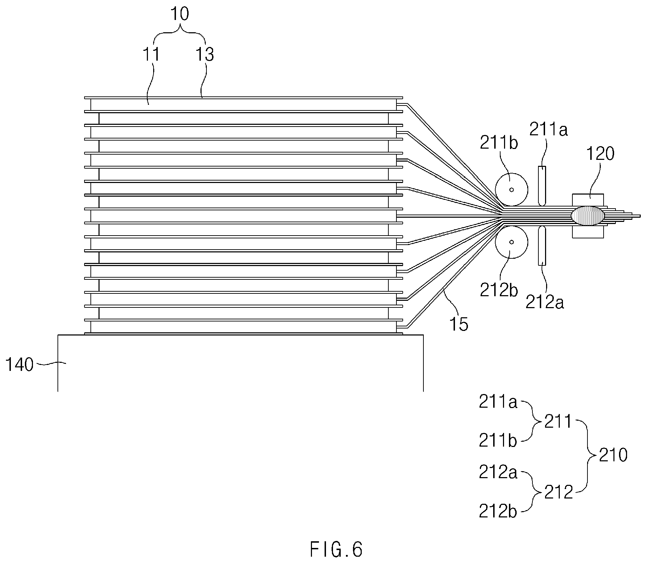

FIG. 6 is a view illustrating an apparatus for welding an electrode tab according to a non-claimed embodiment. The welding apparatus according to Embodiment 2 is different from the welding apparatus according to Embodiment 1 in a guide part. Hereinafter, the guide part according to Embodiment 2 will be mainly described. For reference, the matters described in Embodiment 1 may be applied to Embodiment 2 in the same or similar manner.

The guide part 210 may include a first rod part 211 disposed at one side of upper and lower sides of the electrode tabs 15. In FIG. 6, the first rod part 211 disposed above the electrode tabs 15 is illustrated. The guide part 210 may include a second rod part 212 disposed at the other side of the upper and lower sides of the electrode tabs 15. In FIG. 6, the second rod part 212 disposed below the electrode tabs 15 is disposed.

The first rod part 211 may include a first pressing rod 211a for pressing the electrode tabs 15 in the vertical direction. In FIG. 6, the first pressing rod 211a disposed above the electrode tabs 15 to descend so as to press the electrode tabs 15 is illustrated. The first pressing rod 211a may be implemented in various shapes capable of pressing the electrode tabs 15. In FIG. 6, a rod-shaped first pressing rod 211a having a convex lower end is illustrated. The first pressing rod 211a may descend to approach the electrode tabs 15 or ascend to move away from the electrode tabs 15. The contents with respect to the first pressing rod 211a may be equally or similarly applied to the second pressing rod 212a to be described later.

The first rod part 211 may include a first movable roller 211b configured to move toward the electrode assembly 10 and pull at least a portion of the electrode tabs 15 toward the electrode assembly 10. The first movable roller 211b may be implemented in various shapes capable of pulling the electrode tab 15. In FIG. 6, a roller-shaped first movable roller 211b is illustrated. The first movable roller 211b moves in a direction approaching the electrode assembly 10 (e.g., a left direction with reference to FIG. 6) and a direction away from the electrode assembly 10 (e.g., a right direction with reference to FIG. 6). In addition, the first movable roller 211b may move downward to approach the electrode tab 15 or upward to move away from the electrode tab 15. The contents of the first movable roller 211b may be equally or similarly applied to the second movable roller 212b to be described later.

The second rod part 212 may include a second pressing rod 212a for pressing the electrode tabs 15 together with the first pressing rod 211a in a vertical direction by relative movement of the second pressing rod 212a with respect to the first pressing rod 211a. The relative movement of the second pressing rod 212a may be described as a case in which the second pressing rod 212a moves toward the first pressing rod 211a in a stationary state of the first pressing rod 211a, a case in which the first pressing rod 211a moves toward the second pressing rod 212a in a stationary state of the second pressing rod 212a, or a case in which the first and second pressing rods 211a and 212a move relatively toward each other. Due to the relative movement of the first and second pressing rods 211a and 212a, the electrode tabs 15 may be pressed in the vertical direction, and thus, the electrode tabs 15 may be gathered on the predetermined area.

The second rod part 212 may include a second movable roller 212b configured to move toward the electrode assembly 10 by being interlocked with the first movable roller 211b in the state in which the electrode tabs 15 are pressed vertically by the first and second pressing rods 211a and 212a. For example, when the first movable roller 211b moves, the second movable roller 212b may also move together.

In the state in which the first and second pressing rods 211a and 212a move relatively toward each other to gather the electrode tabs 15 on a predetermined gathering area, the first and second movable rollers 211b and 212b may move together toward the electrode assembly 10 to increase a 'length from the electrode assembly 10 to the welding (scheduled) area' in at least a portion of the electrode tabs 15 (e.g., the uppermost or lowermost electrode tab of the electrode tabs). After the increase in length as described above, the welding part 120 may weld the electrode tabs 15 on the welding area. For reference, the first and second movable rollers 211b and 212b may be spaced apart from the electrode tabs 15 in the vertical direction, and then move toward the electrode assembly 10 after approaching the electrode tabs 15. It may also be considered that the guide part 210 includes only the first movable roller 211b to press the electrode tab 15 only by the first movable roller 211b.

The above-disclosed subject matter is to be considered illustrative, and not restrictive, and the appended claims are intended to cover all such modifications, enhancements, and other embodiments, which fall within the scope of the present invention.

Thus, the embodiment of the present invention is to be considered illustrative, and not restrictive, and the present invention is not limited to the foregoing embodiment.

Therefore, the scope of the present invention is defined not by the detailed description of the invention but by the appended claims, and all differences within the scope will be construed as being included in the present invention.

## Claims

1. An apparatus for welding electrode tabs (15) protruding from an electrode assembly (10) to each other, the apparatus comprising:
a guide part (110) configured to gather the electrode tabs (15); and
a welding part (120) configured to weld the electrode tabs (15) gathered by the guide part (110) on a predetermined welding area (W),
**characterised in that** the guide part (110) is configured to press the electrode tabs (15) toward the electrode assembly (10) while moving toward the electrode assembly (10) so that a length (L) from the electrode assembly (10) to the welding area (W) increases in at least a portion of the electrode tabs (15) before being welded by the welding part (120) wherein the guide part (110) comprises a first rod (111) disposed at one of upper and lower sides of the electrode tabs (15) and a second rod (112) disposed at the other of the upper and lower sides of the electrode tabs (15), when electrodes (11) and separators (13) of the electrode assembly (10) are stacked in a vertical direction perpendicular to the ground,
wherein the first rod (111) is configured to move in a proximity direction directed toward the electrode assembly (10),
wherein the first rod (111) comprises:
a first rod body (111a) configured to move in the proximity direction; and
a first rod roller (111b) disposed on an end toward the electrode tabs (15) of upper and lower ends of the first rod body (111a) so as to be in contact with the electrode tab (15) that is disposed to be closest among the electrode tabs (15) to rotate when moving in the proximity direction, and
wherein the second rod (112) comprises:
a second rod body (112a) configured to move in the proximity direction by being interlocked with the first rod body (111a); and
a second rod roller (112b) disposed on an end toward the electrode tabs (15) of upper and lower ends of the second rod body (112a) so as to, in use, be in contact with the electrode tab (15) that is disposed to be closest among the electrode tabs (15) to rotate in a state of pressing the electrode tabs (15) in the vertical direction together with the first rod roller (111b) and being aligned in the vertical direction together with the first rod roller (111b) when moving in the proximity direction.

2. The apparatus of claim 1, wherein the first and second rods (111, 112) are configured to relatively move toward each other so as to adjust a distance therebetween in the vertical direction.

3. The apparatus of claim 2, wherein the first rod (111) is configured to move in the proximity direction in a state in which the first and second rods (111, 112) relatively move toward each other to press the electrode tabs (15) in the vertical direction.

4. A method for welding electrode tabs (15) protruding from an electrode assembly (10), the method comprising:
(a) pressing the electrode tabs (15) upward and downward to gather the electrode tabs (15), when electrodes (11) and separators (12) of the electrode assembly (10) are stacked in a vertical direction perpendicular to the ground;
(b) pressing the electrode tabs (15) toward the electrode assembly (10) in a state of gathering the electrode tabs (15) to cause pulling at least a portion of the electrode tabs (15) toward the electrode assembly (10); and
(c) welding the electrode tabs (15) on a predetermined welding area (W) after the pulling, wherein the at least a portion of the electrode tabs (15) is welded in a state in which a length (L) from the electrode assembly (10) to the welding area (W) increases by the pulling; and
wherein step (b) comprises allowing a first rod (111) disposed at one of upper and lower sides of the electrode tabs (15) to move in a proximity direction directed toward the electrode assembly (10) so as to press the at least a portion of the electrode tabs (15) toward the electrode assembly (10) and
wherein the first rod (111) comprises:
a first rod body (111a) configured to move in the proximity direction; and
a first rod roller (111b) disposed on an end toward the electrode tabs (15) of upper and lower ends of the first rod body (111a) so as to be in contact with the electrode tab (15) that is disposed to be closest among the electrode tabs (15) to rotate when moving in the proximity direction,
wherein the step (a) comprises allowing a second rod (112) disposed at the other of the upper and lower sides of the electrode tabs (15) to press the electrode tabs (15) upward and downward together with the first rod (111), wherein the second rod (112) comprises:
a second rod body (112a) configured to move in the proximity direction by being interlocked with the first rod body (111a); and
a second rod roller (112b) disposed on an end toward the electrode tabs (15) of upper and lower ends of the second rod body (112a) so as to,
in use during step b),
be in contact with the electrode tab (15) that is disposed to be closest among the electrode tabs (15) to rotate in a state of pressing the electrode tabs (15) in the vertical direction together with the first rod roller (111b)and being aligned in the vertical direction together with the first rod roller (111b) when moving in the proximity direction.

5. The method of claim 4, wherein the first rod roller (111b) is configured to be movable in a proximity direction directed toward the electrode assembly (10), in a separation direction directed away from the electrode assembly (10), and in an upward or downward direction.

## Patentansprüche

1. Vorrichtung zum Schweißen von Elektrodenlaschen (15), die von einer Elektrodenanordnung (10) vorstehen, aneinander, wobei die Vorrichtung umfasst:
ein Führungsteil (110), das konfiguriert ist, um die Elektrodenlaschen (15) zusammenzufassen; und
ein Schweißteil (120), das konfiguriert ist, um die durch das Führungsteil (110) gesammelten Elektrodenlaschen (15) auf einem vorbestimmten Schweißbereich (W) zu schweißen,
**dadurch gekennzeichnet, dass** das Führungsteil (110) konfiguriert ist, um die Elektrodenlaschen (15) in Richtung der Elektrodenanordnung (10) zu drücken, während es sich in Richtung der Elektrodenanordnung (10) bewegt, so dass eine Länge (L) von der Elektrodenanordnung (10) zum Schweißbereich (W) in mindestens einem Abschnitt der Elektrodenlaschen (15) zunimmt, bevor sie durch das Schweißteil (120) geschweißt werden, wobei das Führungsteil (110) eine erste Stange (111), die an einer von der Ober- und Unterseite der Elektrodenlaschen (15) angeordnet ist, und eine zweite Stange (112) umfasst, die an der anderen von der Ober- und Unterseite der Elektrodenlaschen (15) angeordnet ist, wenn Elektroden (11) und Separatoren (13) der Elektrodenanordnung (10) in einer vertikalen Richtung senkrecht zum Boden gestapelt sind,
wobei die erste Stange (111) konfiguriert ist, um sich in einer zur Elektrodenanordnung (10) gerichteten Annäherungsrichtung zu bewegen,
wobei die erste Stange (111) umfasst:
einen ersten Stangenkörper (111a), der konfiguriert ist, um sich in der Annäherungsrichtung zu bewegen; und
eine erste Stangenrolle (111b), die an einem Ende in Richtung der Elektrodenlaschen (15) des oberen und des unteren Endes des ersten Stangenkörpers (111a) angeordnet ist, um mit der Elektrodenlasche (15) in Kontakt zu sein, die so angeordnet ist, dass sie unter den Elektrodenlaschen (15) am nächsten liegt, um sich zu drehen, wenn sie sich in der Annäherungsrichtung bewegt, und
wobei die zweite Stange (112) umfasst:
einen zweiten Stangenkörper (112a), der konfiguriert ist, um sich in der Annäherungsrichtung durch Kopplung mit dem ersten Stangenkörper (111a) zu bewegen; und
eine zweite Stangenrolle (112b), die an einem Ende in Richtung der Elektrodenlaschen (15) des oberen und des unteren Endes des zweiten Stangenkörpers (112a) angeordnet ist, um im Gebrauch mit der Elektrodenlasche (15) in Kontakt zu sein, die so angeordnet ist, dass sie unter den Elektrodenlaschen (15) am nächsten liegt, um sich in einem Zustand des Drückens der Elektrodenlaschen (15) in der vertikalen Richtung zusammen mit der ersten Stangenrolle (111b) zu drehen und in der vertikalen Richtung zusammen mit der ersten Stangenrolle (111b) ausgerichtet zu sein, wenn sie sich in der Annäherungsrichtung bewegt.

2. Vorrichtung nach Anspruch 1, wobei die erste und die zweite Stange (111, 112) konfiguriert sind, um sich relativ zueinander zu bewegen, um einen Abstand dazwischen in der vertikalen Richtung einzustellen.

3. Vorrichtung nach Anspruch 2, wobei die erste Stange (111) konfiguriert ist, um sich in der Annäherungsrichtung in einem Zustand zu bewegen, in dem sich die erste und die zweite Stange (111, 112) relativ zueinander bewegen, um die Elektrodenlaschen (15) in der vertikalen Richtung zu drücken.

4. Verfahren zum Schweißen von Elektrodenlaschen (15), die von einer Elektrodenanordnung (10) vorstehen, wobei das Verfahren umfasst:
(a) Drücken der Elektrodenlaschen (15) aufwärts und abwärts, um die Elektrodenlaschen (15) zusammenzufassen, wenn Elektroden (11) und Separatoren (12) der Elektrodenanordnung (10) in einer vertikalen Richtung senkrecht zum Boden gestapelt sind;
(b) Drücken der Elektrodenlaschen (15) in Richtung der Elektrodenanordnung (10) in einem Zustand des Zusammenfassens der Elektrodenlaschen (15), um ein Ziehen mindestens eines Abschnitts der Elektrodenlaschen (15) in Richtung der Elektrodenanordnung (10) zu bewirken; und
(c) Schweißen der Elektrodenlaschen (15) auf einem vorbestimmten Schweißbereich (W) nach dem Ziehen, wobei der mindestens eine Abschnitt der Elektrodenlaschen (15) in einem Zustand geschweißt wird, in dem eine Länge (L) von der Elektrodenanordnung (10) zum Schweißbereich (W) durch das Ziehen zunimmt; und
**dadurch gekennzeichnet, dass** der Schritt (b) das Ermöglichen umfasst, dass sich eine erste Stange (111), die an einer von der Ober- und Unterseite der Elektrodenlaschen (15) angeordnet ist, in einer zur Elektrodenanordnung (10) gerichteten Annäherungsrichtung bewegt, um den mindestens einen Abschnitt der Elektrodenlaschen (15) in Richtung der Elektrodenanordnung (10) zu drücken, und
wobei die erste Stange (111) umfasst:
einen ersten Stangenkörper (111a), der konfiguriert ist, um sich in der Annäherungsrichtung zu bewegen; und
eine erste Stangenrolle (111b), die an einem Ende in Richtung der Elektrodenlaschen (15) des oberen und des unteren Endes des ersten Stangenkörpers (111a) angeordnet ist, um mit der Elektrodenlasche (15) in Kontakt zu sein, die so angeordnet ist, dass sie unter den Elektrodenlaschen (15) am nächsten liegt, um sich zu drehen, wenn sie sich in der Annäherungsrichtung bewegt,
wobei der Schritt (a) das Ermöglichen umfasst, dass eine zweite Stange (112), die an der anderen von der Ober- und Unterseite der Elektrodenlaschen (15) angeordnet ist, die Elektrodenlaschen (15) aufwärts und abwärts zusammen mit der ersten Stange (111) drückt, wobei die zweite Stange (112) umfasst: einen zweiten Stangenkörper (112a), der konfiguriert ist, um sich in der Annäherungsrichtung durch Kopplung mit dem ersten Stangenkörper (111a) zu bewegen; und
eine zweite Stangenrolle (112b), die an einem Ende in Richtung der Elektrodenlaschen (15) des oberen und des unteren Endes des zweiten Stangenkörpers (112a) angeordnet ist, um im Gebrauch während des Schritts b) mit der Elektrodenlasche (15) in Kontakt zu sein, die so angeordnet ist, dass sie unter den Elektrodenlaschen (15) am nächsten liegt, um sich in einem Zustand des Drückens der Elektrodenlaschen (15) in der vertikalen Richtung zusammen mit der ersten Stangenrolle (111b) zu drehen und in der vertikalen Richtung zusammen mit der ersten Stangenrolle (111b) ausgerichtet zu sein, wenn sie sich in der Annäherungsrichtung bewegt.

5. Verfahren nach Anspruch 4, wobei die erste Stangenrolle (111b) konfiguriert ist, um in einer zur Elektrodenanordnung (10) gerichteten Annäherungsrichtung, in einer von der Elektrodenanordnung (10) weg gerichteten Trennungsrichtung und in einer Richtung nach oben oder nach unten bewegt werden zu können.

## Revendications

1. Appareil pour souder des languettes d'électrode (15) faisant saillie d'un ensemble d'électrodes (10) les unes aux autres, l'appareil comprenant :
une partie de guidage (110) configurée pour rassembler les languettes d'électrode (15) ; et
une partie de soudage (120) configurée pour souder les languettes d'électrode (15) rassemblées par la partie de guidage (110) sur une zone de soudage (W) prédéterminée,
**caractérisé en ce que**
la partie de guidage (110) est configurée pour presser les languettes d'électrode (15) vers l'ensemble d'électrodes (10) tout en se déplaçant vers l'ensemble d'électrodes (10) de sorte qu'une longueur (L) de l'ensemble d'électrodes (10) à la zone de soudage (W) augmente dans au moins une partie des languettes d'électrode (15) avant d'être soudées par la partie de soudage (120)
dans lequel la partie de guidage (110) comprend une première tige (111) disposée sur l'un des côtés supérieur et inférieur des languettes d'électrode (15) et une deuxième tige (112) disposée sur l'autre des côtés supérieur et inférieur des languettes d'électrode (15), lorsque des électrodes (11) et des séparateurs (13) de l'ensemble d'électrodes (10) sont empilés dans une direction verticale perpendiculaire au sol,
dans lequel la première tige (111) est configurée pour se déplacer dans une direction de proximité dirigée vers l'ensemble d'électrodes (10),
dans lequel la première tige (111) comprend :
un premier corps de tige (111a) configuré pour se déplacer dans la direction de proximité ; et
un premier rouleau de tige (111b) disposé sur une extrémité vers les languettes d'électrode (15) des extrémités supérieure et inférieure du premier corps de tige (111a) de manière à être en contact avec la languette d'électrode (15) qui est disposée pour être la plus proche parmi les languettes d'électrode (15) pour tourner lors du déplacement dans la direction de proximité, et
dans lequel la deuxième tige (112) comprend :
un deuxième corps de tige (112a) configuré pour se déplacer dans la direction de proximité en étant solidarisé avec le premier corps de tige (111a) ; et
un deuxième rouleau de tige (112b) disposé sur une extrémité vers les languettes d'électrode (15) des extrémités supérieure et inférieure du deuxième corps de tige (112a) de manière à, en cours d'utilisation,
être en contact avec la languette d'électrode (15) qui est disposée pour être la plus proche parmi les languettes d'électrode (15) pour tourner dans un état de pression des languettes d'électrode (15) dans la direction verticale conjointement avec le premier rouleau de tige (111b) et en étant aligné dans la direction verticale conjointement avec le premier rouleau de tige (111b) lors du déplacement dans la direction de proximité.

2. Appareil selon la revendication 1, dans lequel les première et deuxième tiges (111, 112) sont configurées pour se déplacer de manière relative l'une vers l'autre de manière à ajuster une distance entre elles dans la direction verticale.

3. Appareil selon la revendication 2, dans lequel la première tige (111) est configurée pour se déplacer dans la direction de proximité dans un état dans lequel les première et deuxième tiges (111, 112) se déplacent de manière relative l'une vers l'autre pour presser les languettes d'électrode (15) dans la direction verticale.

4. Procédé de soudage de languettes d'électrode (15) faisant saillie d'un ensemble d'électrodes (10), le procédé comprenant :
(a) le pressage des languettes d'électrode (15) vers le haut et vers le bas pour rassembler les languettes d'électrode (15), lorsque des électrodes (11) et des séparateurs (12) de l'ensemble d'électrodes (10) sont empilés dans une direction verticale perpendiculaire au sol;
(b) le pressage des languettes d'électrode (15) vers l'ensemble d'électrodes (10) dans un état de rassemblement des languettes d'électrode (15) pour provoquer la traction d'au moins une partie des languettes d'électrode (15) vers l'ensemble d'électrodes (10) ; et
(c) le soudage des languettes d'électrode (15) sur une zone de soudage (W) prédéterminée après la traction, dans lequel la au moins une partie des languettes d'électrode (15) est soudée dans un état dans lequel une longueur (L) de l'ensemble d'électrodes (10) à la zone de soudage (W) augmente par la traction ; et
dans lequel l'étape (b) comprend le fait de permettre à une première tige (111) disposée sur l'un des côtés supérieur et inférieur des languettes d'électrode (15) de se déplacer dans une direction de proximité dirigée vers l'ensemble d'électrodes (10) de manière à presser la au moins une partie des languettes d'électrode (15) vers l'ensemble d'électrodes (10) et
dans lequel la première tige (111) comprend :
un premier corps de tige (111a) configuré pour se déplacer dans la direction de proximité ; et
un premier rouleau de tige (111b) disposé sur une extrémité vers les languettes d'électrode (15) des extrémités supérieure et inférieure du premier corps de tige (111a) de manière à être en contact avec la languette d'électrode (15) qui est disposée pour être la plus proche parmi les languettes d'électrode (15) pour tourner lors du déplacement dans la direction de proximité,
dans lequel l'étape (a) comprend le fait de permettre à une deuxième tige (112) disposée sur l'autre des côtés supérieur et inférieur des languettes d'électrode (15) de presser les languettes d'électrode (15) vers le haut et vers le bas conjointement avec la première tige (111), dans lequel la deuxième tige (112) comprend :
un deuxième corps de tige (112a) configuré pour se déplacer dans la direction de proximité en étant solidarisé avec le premier corps de tige (111a) ; et
un deuxième rouleau de tige (112b) disposé sur une extrémité vers les languettes d'électrode (15) des extrémités supérieure et inférieure du deuxième corps de tige (112a) de manière à,
en cours d'utilisation pendant l'étape b),
être en contact avec la languette d'électrode (15) qui est disposée pour être la plus proche parmi les languettes d'électrode (15) pour tourner dans un état de pression des languettes d'électrode (15) dans la direction verticale conjointement avec le premier rouleau de tige (111b) et en étant aligné dans la direction verticale conjointement avec le premier rouleau de tige (111b) lors du déplacement dans la direction de proximité.

5. Procédé selon la revendication 4, dans lequel le premier rouleau de tige (111b) est configuré pour être mobile dans une direction de proximité dirigée vers l'ensemble d'électrodes (10), dans une direction de séparation dirigée à l'opposé de l'ensemble d'électrodes (10), et dans une direction ascendante ou descendante.
